# EUROPÄISCHE PATENTSCHRIFT

(11) **EP 0 725 342 B1**
(45) Veröffentlichungstag und Bekanntmachung des Hinweises auf die Patenterteilung: **30.09.1998**
(21) Anmeldenummer: 95101365.5
(22) Anmeldetag: 01.02.1995
(51) Int. Cl.: G06F 11/00, G06F 11/34

(54) **Tracersystem**
Tracer system
Système de traçage

(43) Veröffentlichungstag der Anmeldung: 07.08.1996
(73) Patentinhaber: SIEMENS AKTIENGESELLSCHAFT, 80333 München (DE)
(72) Erfinder: Harangi, Laszlo, Dipl.-Ing., D-82211 Herrsching (DE)

(56) Entgegenhaltungen:
- PATENT ABSTRACTS OF JAPAN Bd. 017, Nr. 087 (P-1491) 22 Februar 1993 & JP-A-04 287 241 (NEC CORP) 12 Oktober 1992
- IBM TECHNICAL DISCLOSURE BULLETIN, Bd. 22, Nr. 8A, Januar 1980 NEW YORK US, Seiten 3245-3246, R. MOREAU 'Trace storing unit'

## Beschreibung

Aus der Entwicklung von immer komplexer werdenden Realzeitsystemen, z.B. Vermittlungssystemen, ist die Forderung nach entsprechenden Test- und Fehleranalysemöglichkeiten erwachsen. So gibt es bereits eine Vielzahl von Fehleranalysesystemen, die eine Fehlerlokalisierung in derart komplexen Systemen erleichtern und mit deren Hilfe umfangreiche Fehleranalysevorgange durchgeführt und aufgezeichnet werden können. Ein Beispiel für derartige Test- und Fehleranalysesysteme sind die sog. Tracer-Systeme.

Ein Tracer-System bietet im allgemeinen verschiedene Standard-Betriebsarten, die sich an in der Praxis vorkommenden typischen Anwendungsproblemen orientieren. Typische Standard-Betriebsarten sind bspw. ein Ablauftrace, ein Datentrace, ein Datenmustertrace und ein Prozesswechseltrace.

Beim Ablauftrace wird der Codeablauf eines Prozessors des Realzeitsystems aufgezeichnet. Genauer gesagt werden alle Codeadressen und der zugehörige Maschinencode eines Prozessors in der dynamischen Reihenfolge des "Befehlsziehens" aus dem Speicher des Prozessorssystems bzw. des Prozessors aufgezeichnet. Der Abgriff der Aufzeichnungsdaten (Codeadressen, Code und evtl. Datenadressen und Daten) erfolgt am Bus zwischen Prozessorsystem bzw. Prozessor und Speicher.

Beim Datentrace konzentriert sich das Interesse des Tests im Gegensatz zum Ablauftrace nicht auf den Codebereich des Speichers, sondern auf den Datenbereich.

Die Betriebsart "Datenmustertrace" dient zur Diagnose bestimmter Datenverfalschungen oder für statistische Zwecke. Bei dieser Betriebsart werden nach Angabe eines beispielsweise maximal 4 Byte langen Datenmusters und der entsprechenden Lage innerhalb eines Langwortes vom Tracer alle lesenden und/oder schreibenden Zugriffe mit diesem Datenmuster als Treffer erkannt.

Die Betriebsart "Prozesswechseltrace" vermittelt einen Überblick über das Prozessgeschehen eines Prozessors oder des gesamten Systems. Es handelt sich dabei also um einen sehr groben Tracevorgang, mit dem dynamische Codeabläufe nicht analysiert werden können.

Will man also mit dem Tracer dynamische Codeabläufe analysieren, muß man eine andere Betriebsart, nämlich die Betriebsart "Ablauftrace" anwenden. Der Tracevorgang ist in dieser Betriebsart allerdings so fein, daß der Tracebuffer innerhalb weniger Millisekunden vollauft. Will man in dieser Betriebsart also Codeabläufe im Sekundenbereich analysieren, ist der Tracebuffer zu klein.

In JP-A-04287241 wird ein Tracer-System beschrieben, in dem ein Trace-Vorgang durchgeführt wird, bei dem gemäß der zu tracen den Funktion aufeinanderfolgende Adressen miteinander verglichen werden, um festzustellen, ob die Differenz zwischen den zwei gekannten aufeinanderfolgenden Adressen größer ist als einen vorher definierten Differenzwert.

Der Erfindung liegt die Aufgabe zugrunde, ein Tracersystem anzugeben, das es gestattet, Codeabläufe im Sekundenbereich zu analysieren, ohne an Aussagekraft über die Dynamik der Codeabläufe zu verlieren.

Diese Aufgabe wird von einem Tracersystem gemäß Anspruch 1 gelöst.

Im folgenden wird ein Ausführungsbeispiel der Erfindung anhand der Zeichnung näher erläutert.

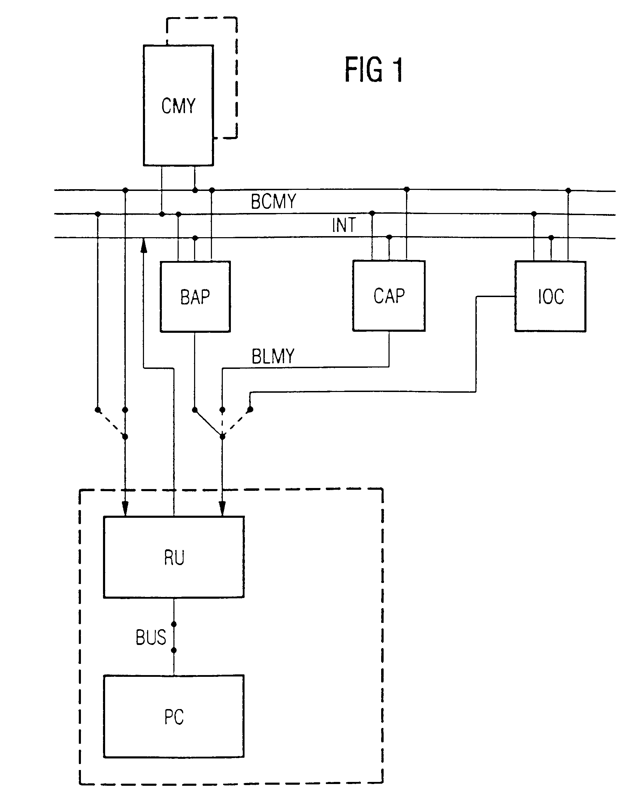

- FIG 1: zeigt ein aus Hardware- und Software-Komponenten bestehendes Tracersystem und dessen Anschluß an das Steuerungssystem eines Realzeitsystems, hier eines Vermittlungssystems

Bei dem Steuerungssystem des Vermittlungssystems handelt es sich um ein zentrales Prozessorsystem, das mehrere Prozessoren BAP, CAP und IOC umfaßt, die über einen gemeinsamen Bus BCMY mit einem gemeinsamen Speicher CMY verbunden sind.

Das Tracer-System umfaßt eine Aufzeichnungseinheit RU, einen Tischrechner PC, Interruptroutinen innerhalb des zentralen Prozessorsystems und Supportsoftware zur Erstellung von Symboltabellen, mithilfe derer vom Tischrechner aus symbolische Eingaben für die RU getätigt werden können.

Die RU umfaßt den Tracebuffer, in dem die Trace-Daten aufgezeichnet werden.

Das Tracersystem ist an einen gemeinsamen Bus BCMY des zentralen Prozessorsystems, an einen internen Bus eines zentralen Prozessors und einen Steuerleitungsbus INT, über den das Tracer-System gezielte Interrupts auslösen kann, anschließbar.

Beim manchen Dynamikuntersuchungen, z.B. bei Dynamikuntersuchungen der Operation-, Administration- und Maintenance-Funktionen kurz OA&M-Funktionen, sind Codeabläufe im Sekundenbereich zu untersuchen. Diese Untersuchung könnte zwar mit der Betriebsart "Prozesswechseltrace" erfaßt werden, daß Ergebnis wurde jedoch nur Prozesslaufdauern enthalten und die Codeabschnitte blieben unsichtbar. Es muß also ein Detailtrace durchgeführt werden, wodurch die dynamisch relevanten Pfade mit einem einzigen Tracevorgang nicht erfaßbar sind, so daß schrittweise analysiert, getraced und überlegt werden muß, was und wie weitergetraced wird. Dies hat zur Folge, daß jede Menge Traceabschnitte (die eigenständige Files sind) entstehen und diese nachträglich manuell zusammengerechnet werden müssen, was mühsam und fehleranfällig ist.

### Dazu ein Beispiel:

Wenn nur ausgewählte Codebereiche getraced werden (weil sonst der Tracebuffer vollauft, d.h. der laufende Tracevorgang wird abgebrochen), entstehen neue Blackbox-Bereiche, d.h. Verzweigungen in unbekannte, vom Tracevorgang nicht erfaßte Codebereiche. Diese Blackbox-Bereiche können nur durch manuelle Vergleiche unter Zuhilfenahme von vorangehenden bzw. nachfolgenden Tracevorgängen und entsprechende Kenntnisse der Entwickler des jeweiligen Programmes identifiziert und ausgewertet werden. Das bedeutet viel manuelle Arbeit (Rückfragen beim Entwickler, Codelesen und Nachmessungen), bevor der gesuchte Codeabschnitt überhaupt gefunden wird. Das Ergebnis ist ein Flickwerk von einem Haufen Traceprotokollen.

Freilich ist es möglich, beliebig lange zu Tracen. Je nach Einstellung wird der Tracebuffer entweder zyklisch überschrieben oder der volle Tracebuffer-Inhalt auf Festplatte übertragen. Allerdings kann während der Datenübertragung aus dem Tracebuffer nicht getraced werden. Deshalb ist der zu tracende Ablauf bei der automatischen Wiederaufnahme des Tracevorgangs nach der Datenübertragung bereits über alle Berge.

Das Grundprinzip der Erfindung besteht nun darin, daß während des Tracevorgangs alle aufeinanderfolgenden Adressen miteinander verglichen werden und nur diejenigen Adressen, (genauer gesagt der unter diesen Adressen abgelegte Code) aufgezeichnet werden, deren Differenz einen mit Hilfe einer entsprechenden Variable vorgebbaren Wert überschreitet. Der maximal vorgebbare Wert sollte sich an der Adressierbarkeit des Speichers des zu untersuchenden Codes orientieren. Die Vorgabe der Sprunggröße sollte für leichtere Bedienung wahlweise dezimal oder hexadezimal möglich sein. Aufgrund der Erfindung werden also vom Tracer nur Quelle und Ziel von in der Größe einstellbaren Sprüngen aufgezeichnet, um zu erreichen, daß der verfügbare Tracebuffer besser ausgenutzt wird. Das Ergebnis des erfindungsgemäßen Tracevorgangs kommt einem Prozedurtrace nahe. Es stört dabei nicht, daß kleinere Prozeduren (mit kurzen Laufdauern) bei größeren Sprung-Werten nicht aufgezeichnet werden.

triebsweise jedoch nicht auf eine Prozedur beschränkt, sondern kann Funktionen von im Prinzip beliebiger Ablauf lange tracen, je nach eingestelltem Sprung-Wert.

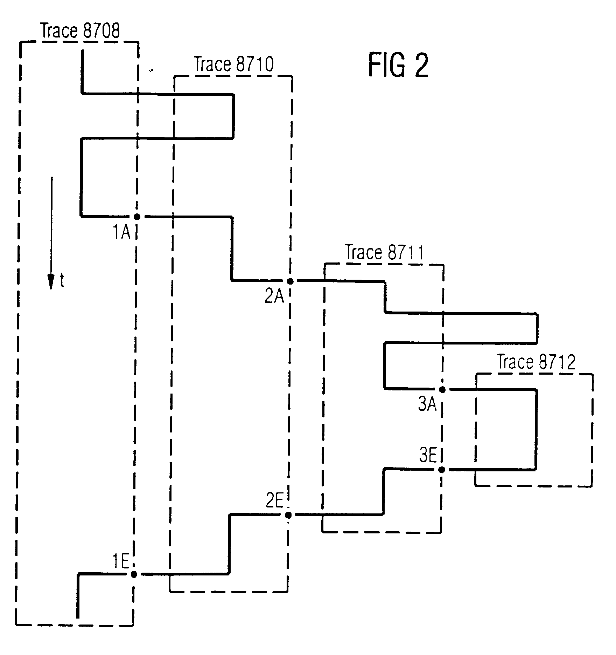

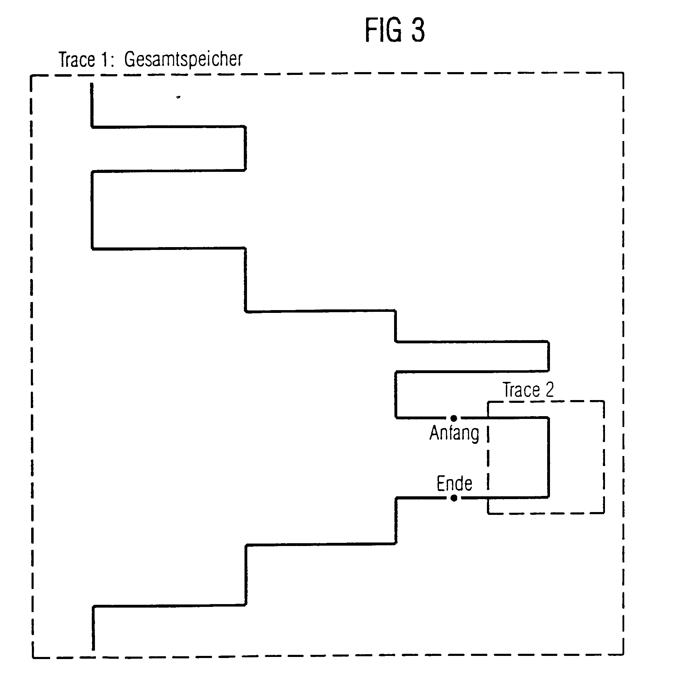

Anhand der FIG 2 und 3 wird im folgenden nochmals der Unterschied im Vorgehen mit Hilfe eines bekannten Tracers und mit Hilfe des erfindungsgemäßen Tracers näher erläutert.
- FIG 2: zeigt die Suche nach einer kritischen Codestelle mit einem bekannten Tracer in der Betriebsart "Branches Only". In einem ersten Trace-Durchgang (Trace 8708) wird der gesamte gemeinsame Speicher CMY getraced. Anhand des Trace-Ergebnisses im Trace-Buffer erkennt ein Tester, daß zwischen den Adressen 1A und 1E eine bestimmte Prozedur über eine Zeitdauer von mehr als einer Sekunde ablief.

Der Tester testet daraufhin mit Hilfe eines zweiten Trace-Durchgangs (Trace 8710) die Prozedur P1.

Aus dem Ergebnis des zweiten Trace-Durchgangs erkennt der Tester, daß zwischen den Adressen 2A und 2E eine Prozedur P2 über eine Zeitdauer von mehr als einer Sekunde lief.

Der Tester testet daraufhin in einem dritten Trace-Durchgang (Trace 8711) die Prozedur P2. Aus dem Ergebnis erkennt er, daß zwischen den Adressen 3A und 3E eine Prozedur P3 lief, die ebenfalls über eine Sekunde lief.

Der Tester testet daraufhin in einem vierten Trace-Durchgang (Trace 8712) die Prozedur P3. Aus dem Ergebnis entnimmt der Tester, daß die Prozedur P3 letztlich mehr als eine Sekunde Dynamik verbraucht.
- FIG 3: zeigt die Ermittlung derselben kritischen Codestelle wie in FIG 2, allerdings mithilfe der erfindungsgemäßen Betriebsweise, in der der dynamisch relevante Pfad in zwei Trace-Schritten bzw. Trace-Vorgängen ermittelt werden kann

Der erste Trace-Vorgang (Trace 1) zeichnet bei Vorgabe eines entsprechend großen Sprungwertes den gesamten Funktionsablauf der zu überprüfenden Funktion, bzw. einer OA&M-Funktion, auf. Aus dem ersten Trace-Durchgang werden die Triggeradressen und damit der Tracebereich für den zweiten Trace-Durchgang gezielt ermittelt. Eine verdächtig hohe Laufzeit zwischen den im Trace-Buffer abgelegten Adressen "Anfang" und "Ende" wird sofort erkannt.

Mit dem Trace-Durchgang (Trace 2) wird dann die fehlerbehaftete Prozedur/Codestelle exakt untersucht.

Für den Traceerfolg und die nachfolgende Auswertung der im Trace-Buffer des Tracers abgespeicherten Trace-Daten ist es wichtig, daß nur in dem Zeitraum aufgezeichnet wird, während die zu untersuchende Funktion aktiv ist. Das wird durch Vorgabe von je einer Start- und Stopadresse (Triggeradressen) erreicht. Der Tracer startet beim Erreichen der Startadresse und stopt beim Erreichen der Stopadresse.

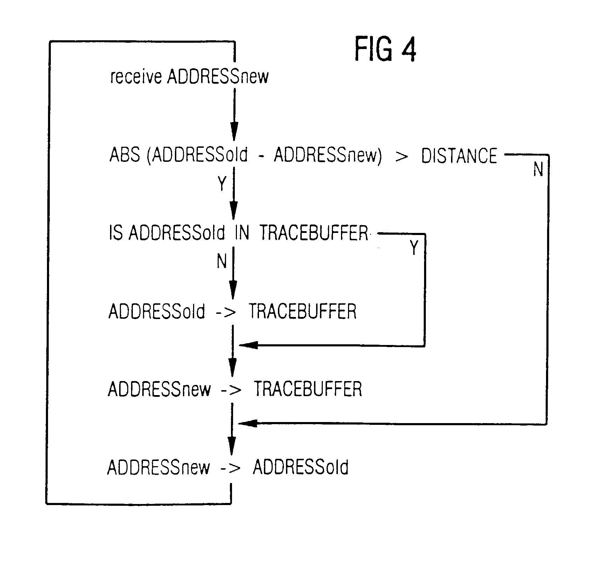

- FIG 4: zeigt den im Tracer enthaltenen erfindungsgemäßen Trace-Algorithmus

Während ein Trace-Vorgang aktiv ist, vergleicht der Tracer alle aufeinanderfolgenden Adressen. Ist der absolute Wert der Differenz zwischen zwei Adressen (Address Old, Address New) größer als ein über eine Variable DISTANCE vorgebbarer Wert (d.h. Sprung zu höherer oder zu niedriger Adresse), werden beide Adressen aufgezeichnet. Anschließend wird die neuere Adresse für den Vergleich mit der nächsten Adresse zwischengespeichert. Ist der absolute Wert der Differenz zwischen zwei Adressen nicht größer als der vorgegebene Wert, wird im Trace-Buffer nichts aufgezeichnet. Die neuere Adresse wird für den Vergleich mit der nächsten Adresse zwischengespeichert.

## Patentansprüche

1. Tracer-System mit
einem Aufzeichnungsmittel(RU), das während eines Trace-Vorgangs gemäß dem Codeablauf der zu tracenden Funktion aufeinanderfolgende Adressen vergleicht und nur diejenigen Adressen aufzeichnet, deren Adressendifferenz einen bestimmten Differenzwert übersteigt,
**gekennzeichnet durch**
ein Einstellmittel(DISTANCE), über das der bestimmte Differenzwert vom Bediener des Tracer-Systems einstellbar ist.

## Claims

1. Tracer system having a recording means (RU) which, during a trace process, compares successive addresses in accordance with the code sequence of the function to be traced and records only those addresses whose address difference exceeds a specific difference value,
characterized by
a setting means (DISTANCE), via which the specific difference value can be set by the operator of the tracer system.

## Revendications

1. Système de traçage comportant un moyen (RU) d'enregistrement qui, pendant une opération de traçage suivant le déroulement de code de la fonction à tracer, compare des adresses successives et n'enregistre que les adresses dont la différence d'adresse est supérieure à une valeur de différence déterminée, caractérisé par un moyen de réglage (DISTANCE) par l'intermédiaire duquel la valeur de différence déterminée peut être réglée par l'opérateur du système de traçage.
